# EUROPEAN PATENT APPLICATION

(11) **EP 1 505 293 A1**
(43) Date of publication of application: **09.02.2005**
(21) Application number: 04018633.0
(22) Date of filing: 05.08.2004
(51) Int. Cl.: F02M 35/10, F02M 31/135, F02M 69/04, F02M 69/30, F02B 15/00, F02M 57/04, F02M 61/14

(54) **Fuel supply system and fuel supply method for in-cylinder direct fuel injection engine**

(30) Priority: 08.08.2003 JP 2003206652
(71) Applicant: Hitachi, Ltd., Chiyoda-ku, Tokyo 101-8010 (JP)
(72) Inventor: Shimada, Kosaku, Hitachi Ltd, Intell.Prop.Group, Tokyo 100-8220 (JP); Ichihara, Takanobu, Hitachi Ltd, Intell.Prop.Group, Tokyo 100-8220 (JP)
(74) Representative: Beetz & Partner Patentanwälte

(57) **Abstract**

The invention relates to a fuel supply system and fuel supply method for direct injection engines (507) that realize higher output.

In a fuel supply system for a direct injection engine (507) of the present invention, equipped with a primary fuel injector (509) that injects fuel directly into the cylinder (507b) of the direct injection engine (507) and a supercharger (534) that increases the intake air quantity of the engine (507), a secondary fuel injector (530) is installed in addition to the primary fuel injector (509). In a specified engine load area, fuel is supplied using the primary fuel injector (509) and the secondary fuel injector (530). Even though the fuel quantity injected from the primary fuel injector (509) into the cylinder (507b) is limited, the fuel supply system for direct injection engine constructed as above can increase the engine output because the fuel insufficiency can be supplied by the secondary fuel injector (530).

## Description

### FIELD OF THE INVENTION

The present invention relates to a fuel supply system and a fuel supply method for in-cylinder direct fuel injection engine.

### BACKGROUND OF THE INVENTION

For example, U.S. Patent Publication No. 5894832 has proposed heating and vaporizing fuel supplied from a fuel injector by a heater installed in an intake passage so as to reduce fuel adhesion onto the intake passage and an intake valve, thereby improving combustion and reducing emissions of hydrocarbon at the time of cold start of an engine particularly.

Japanese Application Patent Laid-Open Publication No. Hei 11-166421 have proposed, instead of a port injection engine that fuel is injected at an intake port, an in-cylinder direct fuel injection engine that fuel is injected directly into the engine. The in-cylinder direct fuel injection engine intends to reduce fuel consumption with aid of stratified combustion as described in the publication.

On a port injection engine, a fuel injector installed in the intake port of each cylinder has the following degree of freedom about a period of time in which can inject fuel. That is, the period can be set at the time of at least one of the compression stroke, the expansion stroke, the exhaust stroke, and the intake stroke just before the combustion cycle of the injected fuel.

On the other hand, on an in-cylinder direct fuel injection engine, a period of time in which a fuel injector installed on each cylinder can inject fuel is limited shorter than that on a port injection engine. That is, only at least one of the intake stroke and the compression stroke.

Accordingly, the fuel injector for in-cylinder direct fuel injection is required to have higher injection rate and greater dynamic range than the fuel injector for port injection.

In the prior art, higher fuel injection rate is realized by increasing the fuel pressure and greater dynamic range is realized by varying the fuel pressure.

By the way, on an in-cylinder direct fuel injection engine equipped with a supercharger, although the minimum output required on the minimum load like idling is nearly equal to that of an engine without supercharger, the maximum output required on high load can be increased than that without supercharger. Therefore, the in-cylinder direct fuel injection engine with the supercharger is required much greater than dynamic range. However, on the prior art, there has been limitations in extending the dynamic range and increasing the output by utilizing only supercharger on the direct fuel injection engine.

### SUMMARY OF THE INVENTION

The present invention is to solve the above problems and to provide a fuel supply system and method for in-cylinder direct fuel injection engine that realizes higher output.

A fuel supply system for in-cylinder direct fuel injection engine of the present invention may comprise a primary fuel injector for injecting fuel directly into a cylinder of an engine; a supercharger for increasing an intake air quantity of the engine; and a secondary fuel injector provided in addition to the primary fuel injector. In a specified engine load area, fuel may be supplied using the primary fuel injector and secondary fuel injector together.

Even though the fuel quantity injected from the primary fuel injector into the cylinder is limited, the fuel supply system constructed as above can increase the engine output because the fuel insufficiency can be supplemented by the fuel from the secondary fuel injector.

In addition, an electric heater may be provided on or near to the secondary fuel injector.

With this construction, the fuel supplied from the secondary fuel injector can be vaporized easily even while the engine is cold and hence stable combustion can be provided.

In addition, the electric heater may be not energized in an area where the engine load is higher than a specified value, and/or the electric heater may be not energized under a condition where fuel is supplied using the primary fuel injector and the secondary fuel injector. Or the electric heater may be not energized under a condition where fuel is supplied using the primary fuel injector and secondary fuel injector in an area where the engine load is higher than a specified value.

With this construction, electric power can be saved while vaporization by the electric heater is not necessary and furthermore the heater can be protected from overload due to continuous operation.

In addition, the electric heater may be energized within a specified period of time after the startup cranking while the catalyst temperature is increasing.

With this construction, the heater can be energized conditionally within a specified period of time after the startup cranking while the fuel supplied from the secondary fuel injector needs vaporization.

In addition, the fuel injected from the secondary fuel injector may be used for the combustion contributable to the output of the engine, and the primary fuel injector may be used to inject fuel in a stroke not contributable to the output of the engine.

With this construction, particularly at the time just after the engine startup when the catalyst temperature is still low and so it must be activated as soon as possible, the main combustion is carried out by the fuel injected from the secondary fuel injector. The fuel from the primary fuel injector may be injected with high degree of freedom at any time from the compression stroke to exhaust stroke so as to react in an exhaust pipe and increase the catalyst temperature quickly.

In addition, the fuel injected from the secondary fuel injector and part of the fuel injected from the primary fuel injector may be used for the combustion contributable to the engine output, and the primary fuel injector may be used to inject fuel in a stroke not contributable to the output of the engine.

With this construction, particularly at the time just after the engine startup when the catalyst temperature is still low and so it must be activated as soon as possible, the main combustion is carried out by the fuel injected from the secondary fuel injector and the primary injector. The fuel from the primary fuel injector may be injected with high degree of freedom at any time from the compression stroke to exhaust stroke so as to react in an exhaust pipe and increase the catalyst temperature quickly.

In addition, fuel supply to the primary fuel injector may be carried out by a mechanical high-pressure pump, and/or fuel supply to the secondary fuel injector may be carried out by a motor-driven low-pressure pump.

With this construction, even at the time particularly after the engine startup when the engine speed is low and the flow rate of the mechanical high-pressure pump, of which discharge quantity is proportional to the engine speed, is low accordingly, fuel injection quantity necessary for the engine can be secured from the secondary fuel injector with the aid of the motor-driven low-pressure pump of which discharge quantity does not depend upon the engine speed.

### BRIEF DESCRIPTION OF DRAWINGS

[Fig. 1]
   Figure showing the overall system construction of a direct injection engine of the present invention
[Fig. 2]
   Block diagram of ECU (engine control unit) of the present invention.
[Fig. 3]
   Chart showing the injection quantity characteristic of injector.
[Fig. 4]
   Chart showing the relationship between fuel pressure and injection quantity.
[Fig. 5]
   Chart showing the amount of soot versus fuel pressure.
[Fig. 6]
   Chart showing the relationship between total injection quantity and injection quantity from each fuel injector.
[Fig. 7]
   Chart showing the relationship between load and fuel injection quantity.
[Fig. 8]
   Chart showing an air-fuel ratio map and operating range of the secondary fuel injector.
[Fig. 9]
   Diagram showing the fuel supply system of direct injection engine of the present invention.
[Fig. 10]
   Chart showing the relational operations of the primary fuel injector, secondary fuel injector and heater.
[Fig. 11]
   Chart showing the relational operations of the primary fuel injector, secondary fuel injector and heater.
[Fig. 12]
   Chart showing the relational operations of the primary fuel injector, secondary fuel injector and heater.
[Fig. 13]
   Flowchart of the software for controlling the secondary fuel injector.
[Fig. 14]
   Chart showing an example distribution of fuel injection quantity between the primary fuel injector and secondary fuel injector.
[Fig. 15]
   Chart showing an example distribution of fuel injection quantity between the primary fuel injector and secondary fuel injector.

### DESCRIPTION OF THE PREFERRED EMBODIMENTS

An embodiment of the fuel supply system for in-cylinder direct fuel injection engine according to the present invention will be described hereunder, using figures.

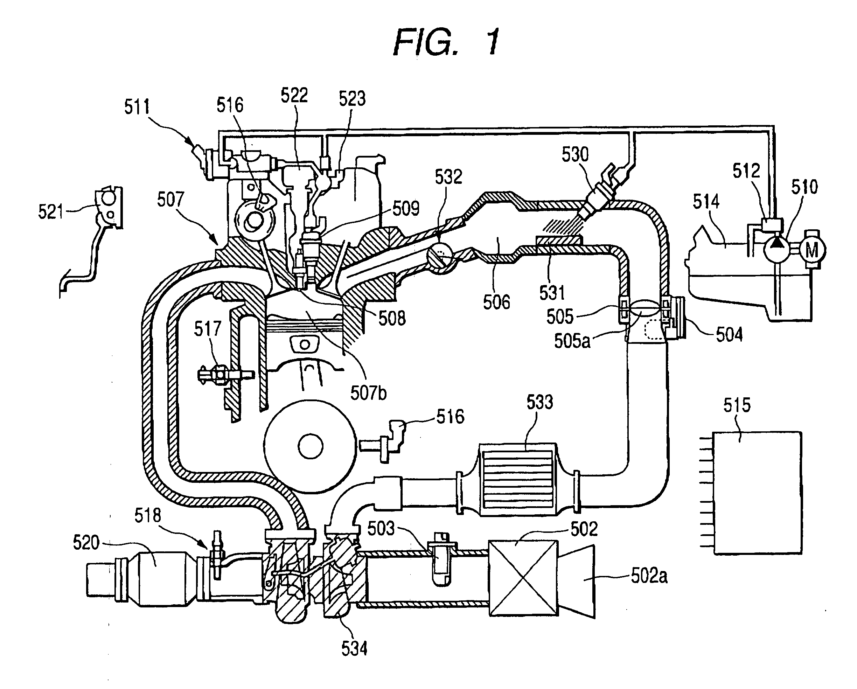

Fig. 1 shows the overall system construction of a direct injection engine 507. Air to be directed into the cylinder 507b (of which air flow is defined as Qc) is taken in from the inlet 502a of an air cleaner 502. The air is passed through an air flow sensor 503 as one of the means for measuring the operating condition of the engine, pressurized by a supercharger 534, and then passed through an intercooler 533, passed through a throttle body 505, in which an electronic control throttle valve 505a for controlling the intake air flow rate is installed. And then the air enters a collector 506. The airflow sensor outputs a signal showing the intake air flow rate to a control unit 515-engine controller.

A throttle sensor 504 for sensing the position of the electronic control throttle valve is installed in the throttle body 505. It is one of the means for measuring the operating condition of the engine. The throttle sensor also outputs a signal to the control unit 515.

Air taken into the collector 506 (of which pressure is defined as Pm) is shared into each intake pipe 501 connected to each cylinder 507b of the engine 507 and then directed into the combustion chamber of the cylinder 507b.

On the other hand, fuel such as gasoline etc. is supplied from a fuel tank 514, pressurized primarily by a fuel pump 510, and regulated to a certain pressure (3 kg/cm² for example) by a fuel pressure regulator 512, and then pressurized secondarily to a higher pressure by a fuel pump 511. The pressurized fuel is injected into the combustion chamber from an injector 509 provided at each cylinder 507b.

In addition to the above fuel supply system, fuel can also be supplied from a secondary fuel injector 530 located in the downstream of the throttle valve and the supplied fuel can be heated by a heater 531. The secondary fuel injector is provided at an intake passage.

The fuel supplied from the injector 509 which is the primary fuel injector, fuel supplied from the secondary fuel injector 530, or fuel supplied from both is ignited by an ignition plug 508 with an ignition signal of which voltage is made high by an ignition coil 522.

By closing a tumble control valve 532 located on the intake manifold, airflow taken in the cylinder is made fast to generate tumble in the combustion chamber mainly for stabilizing the combustion at the time of stratified combustion.

A crank angle sensor 516 mounted on the crankshaft of the engine outputs an angle signal POS for sensing the rotation signal (rotation speed), which shows the rotating position of the crankshaft, to the control unit 515. An A/F sensor 518 installed in the upstream of the catalyst 520 in the exhaust pipe senses exhaust gas and outputs a sensor signal to the control unit 515. Other sensors that output each signal to the control unit include a water temperature sensor 517 for sensing the engine cooling water temperature and an accelerator pedal sensor 521.

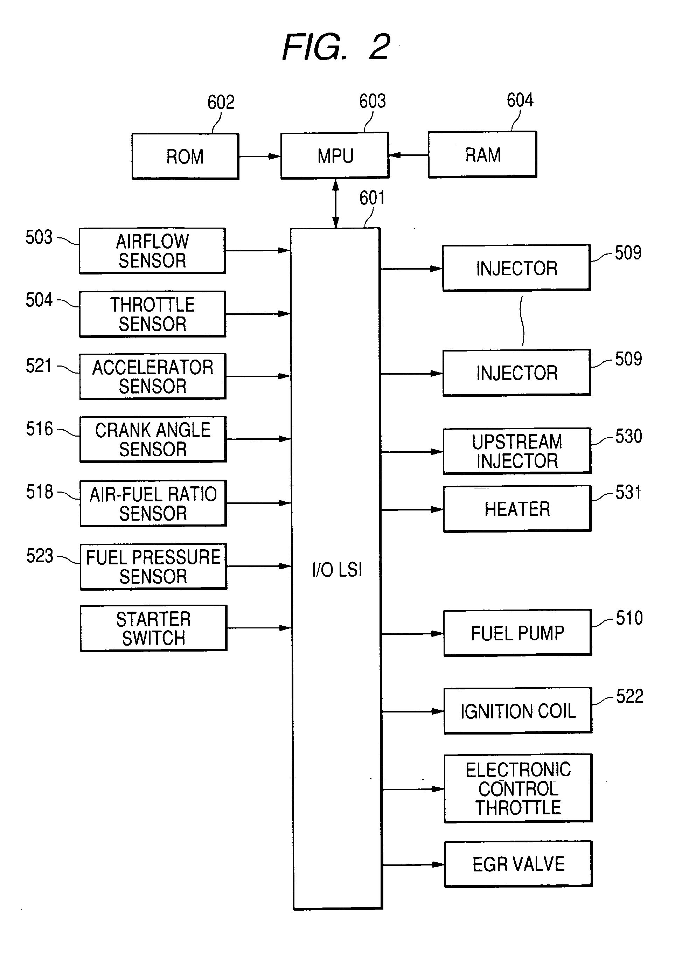

Fig. 2 is the block diagram of the ECU (engine control unit) of the present invention. The control unit 515 mainly comprises MPU603, ROM 602, RAM 604 and I/O LSI 601 including A/D converter as illustrated in Fig. 2. The control unit 515 inputs signals from various sensors, including a signal from an accelerator position sensor (APS) 521, one of the means for measuring (sensing) the operating condition of the engine and a signal from the fuel pressure sensor 523. And the control unit 515 performs predetermined computation, and outputs results of the computation as various control signals to each injector 509 as the primary fuel injector, the secondary fuel injector 530, the ignition coil 522, and the like so as to control the quantity of fuel supply, ignition timing, and so on.

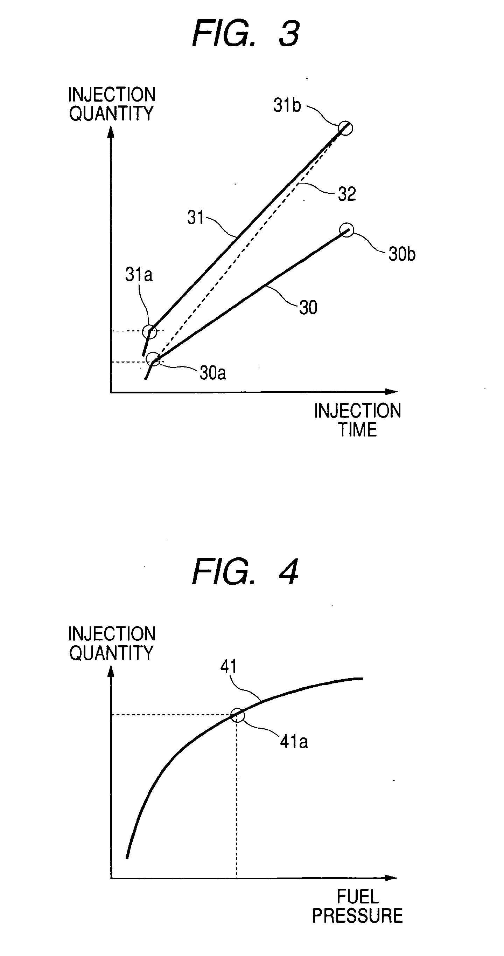

Fig. 3 shows the injection quantity characteristic of the injector 509, and characteristics of three different injectors are shown.

The characteristic 30 is defined as the base characteristic. Point 30a represents the minimum point where the fuel injection quantity is linear in terms of the injection time. Point 30b represents the maximum injection quantity within a specified period of injection time. For an engine of which output needs to be increased with an aid of a supercharger, the maximum injection quantity must be improved.

If the design of the injector 509 is altered geometrically such as by widening the nozzle hole in order to realize the above, the characteristic changes to 31. The maximum injection quantity within a specified period of injection time increases to 31b compared to 30b, but the minimum point of linear fuel injection quantity also increases to 31a. This characteristic 31b satisfies the requirement for higher engine output but is disadvantageous in view of the stability of idling and controllability of air-fuel ratio. A characteristic 32 shown by dotted line is ideal, satisfying both maximum injection quantity and minimum injection quantity, but it is hard to realize as a practical injector.

Fig. 4 shows the relationship between the fuel pressure and the injection quantity. It shows a characteristic on condition that the fuel pressure is varied in a predetermined period of injection time. As shown by the characteristic 41, the injection quantity can be increased by increasing the fuel pressure. In consideration of the combustion, however, there is a limitation to the increase.

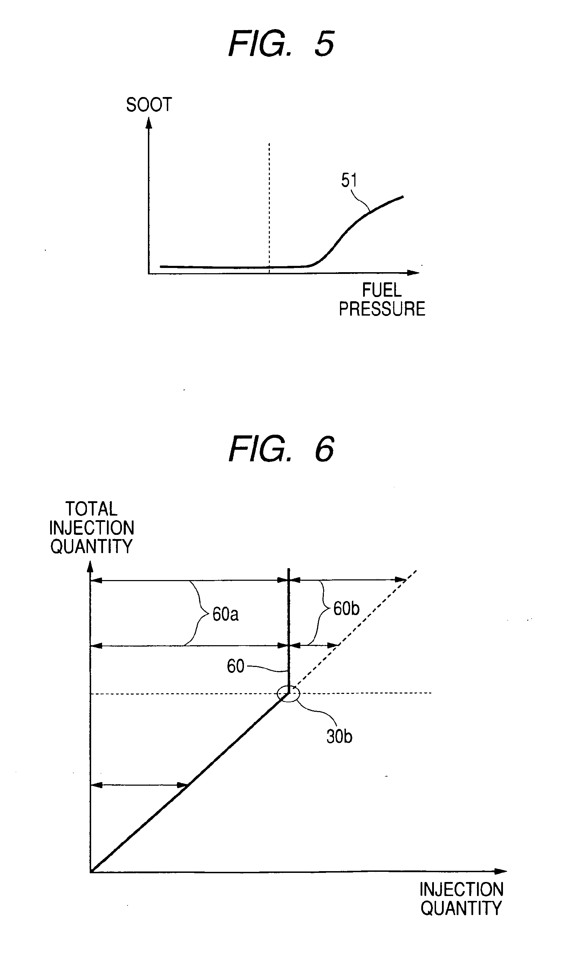

Fig. 5 is a chart showing the amount of soot to fuel pressure. When the fuel pressure is increased and it exceeds a certain point, the amount of soot increases sharply. It can be understood from Fig. 4 and Fig. 5 that there is a limitation in increasing the fuel pressure to increase the maximum injection quantity.

Fig. 6 shows the relationship between the total injection quantity and injection quantity from each fuel injector. It shows a characteristic where the injector 509 is used as the primary fuel injector and the secondary fuel injector 530 is used in combination with the primary injector 509. The vertical axis represents the total quantity of the primary and secondary injectors, and the horizontal axis represents each injection quantity.

This chart is based on a condition that an injector having the base characteristic 30 in Fig. 3 is used as the primary fuel injector. Starting from the total injection quantity zero up to the point 30b, each injection quantity 60a is injected only from the primary fuel injector. In an area exceeding the point 30b, the injection quantity 60b is injected from the secondary injector. Owing to the base characteristic 30, the maximum injection quantity 31b shown in Fig. 3 can be achieved by the secondary injector and the primary injector while maintaining the minimum injection quantity 30a shown in Fig. 3.

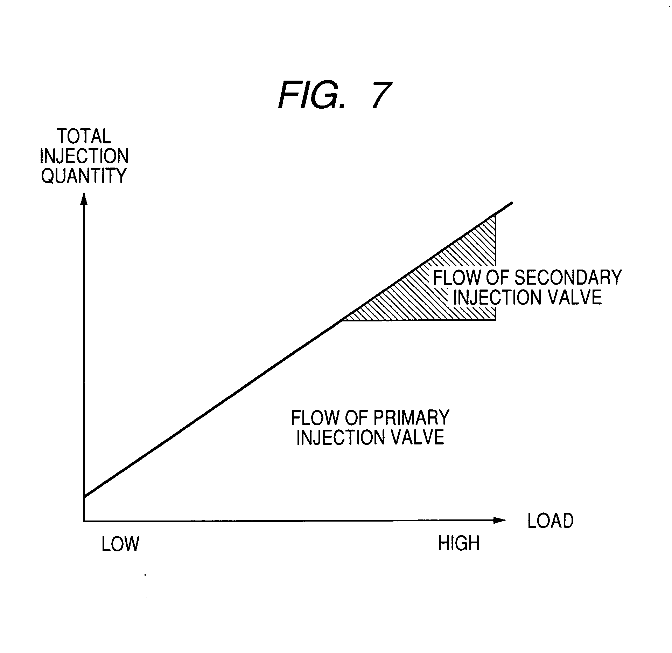

Fig. 7 shows the relationship between the engine load and the fuel injection quantity. The horizontal axis represents the engine load and vertical axis represents the total fuel injection quantity. The chart shows that the quantity of the primary fuel injector is constant at the time of exceeding a specified load and the secondary injector flow is increased at that time.

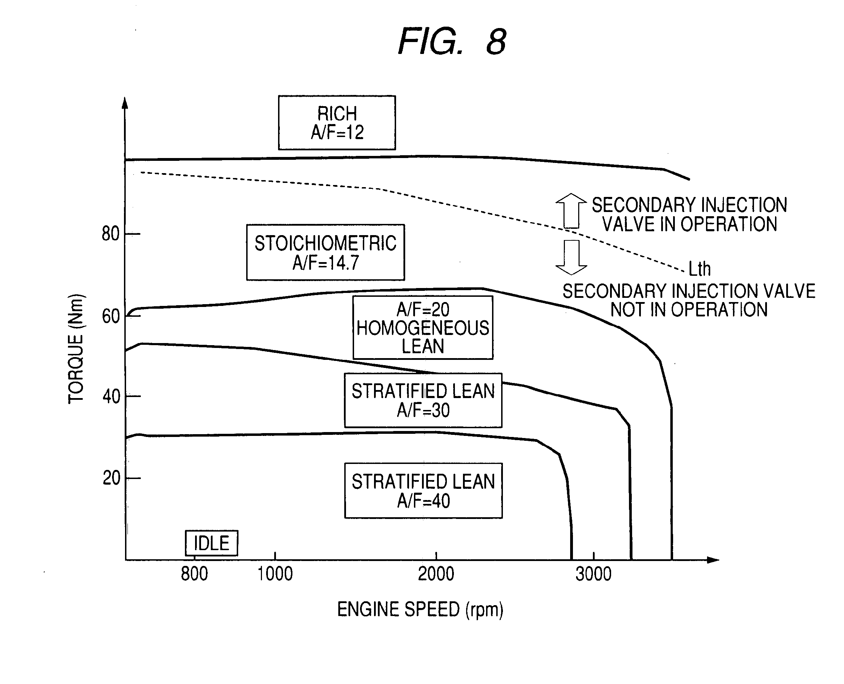

Fig. 8 shows an air-fuel ratio map, in which an operating range of the secondary fuel injector is shown. The air-fuel ratio of an in-cylinder direct fuel injection engine employing the stratified combustion is set in the order of "stratified lean", "homogeneous lean", "stoichiometric", and "rich", starting from the low load side as shown in Fig. 8. The secondary injector is not operated at a load below the dotted line and is operated with the primary injector at a load above the dotted line.

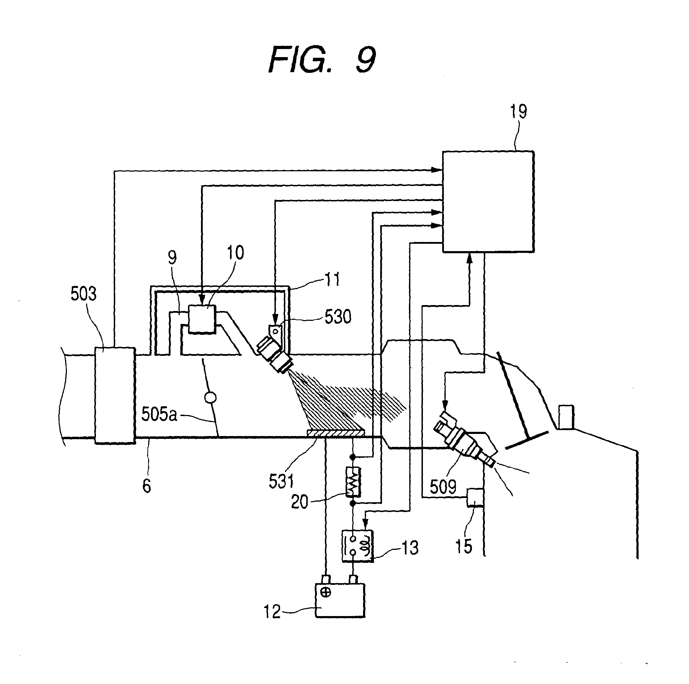

Fig. 9 is a diagram showing the fuel supply system of in-cylinder direct fuel injection engine, taking into account the relationship between the primary fuel injector and secondary fuel injector.

The intake airflow sensor 503 and throttle valve 505a are installed in the intake passage 6 of the engine. The primary fuel injector 509 is provided at each cylinder. In addition, as shown also in Fig. 1, the secondary fuel injector 530 is installed in the intake passage in the upstream of the primary fuel injector 509. The secondary fuel injector 530 is an air-assist type high-atomization injector, and there is provided an air passage 11 through which air for atomizing the fuel is introduced from the upstream of the throttle valve 505a and supplied to the secondary fuel injector 530.

It is generally known that, if the particle size of the injected fuel is atomized to 10 micrometers or so, it flows into the cylinder without adhering on the intake passage. Accordingly, the fuel injected from the secondary fuel injector 530 is atomized to about 10 micrometers so that less fuel adheres on the intake passage.

A heater 531 is installed in the injection direction of the secondary fuel injector 530. The heater may be for example a PTC (positive temperature coefficient) heater that has a self temperature-control function and can keep the temperature constant. Current is supplied to the heater 531 from a battery 12 via a heater relay 13. Current through the heater is sensed as the terminal voltage of a current detecting resistor 20. In addition, an idle speed control valve (ISC valve) 10 for controlling the auxiliary airflow is installed in the auxiliary air passage 9 bypassing the throttle valve. Generally, in an engine system using an electronic control throttle as shown in Fig. 1, ISC valve is not needed.

Although the secondary fuel injector 530 is installed in the intake passage in the upstream of the primary fuel injector 509 in Fig. 1 and Fig. 9, the secondary fuel injector 530 can be installed in the auxiliary air passage 9 bypassing the throttle valve.

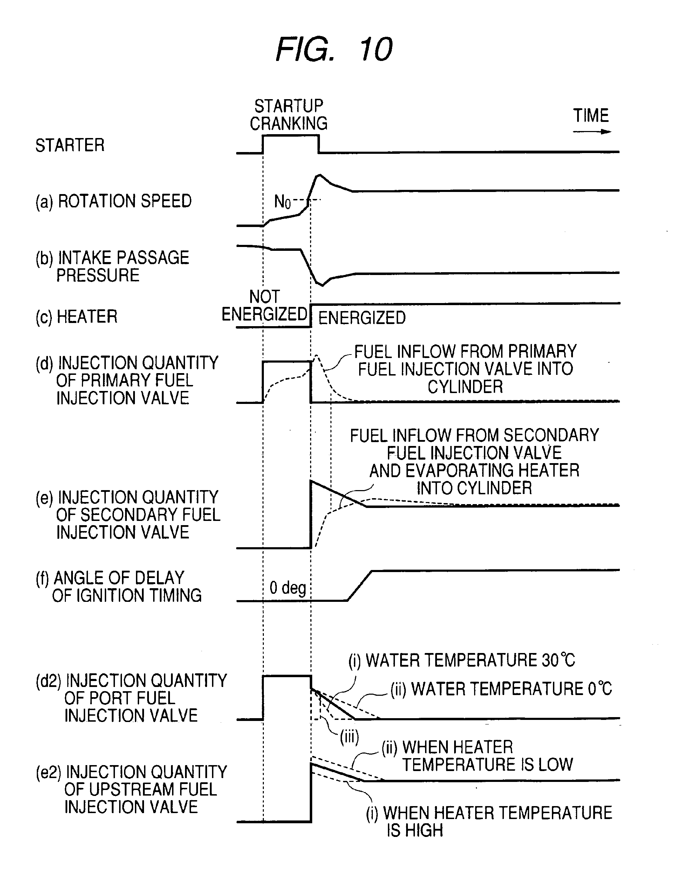

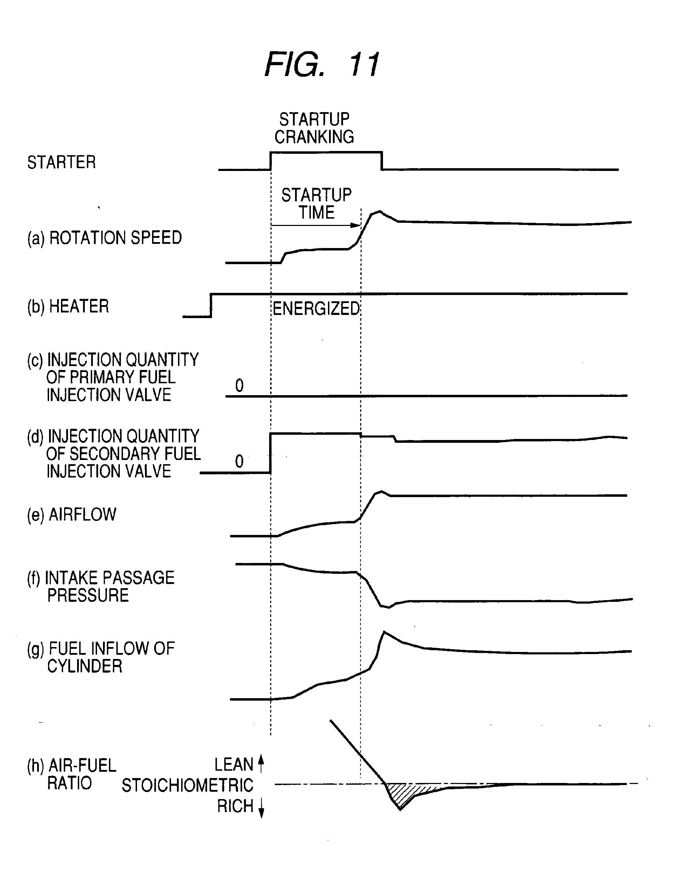

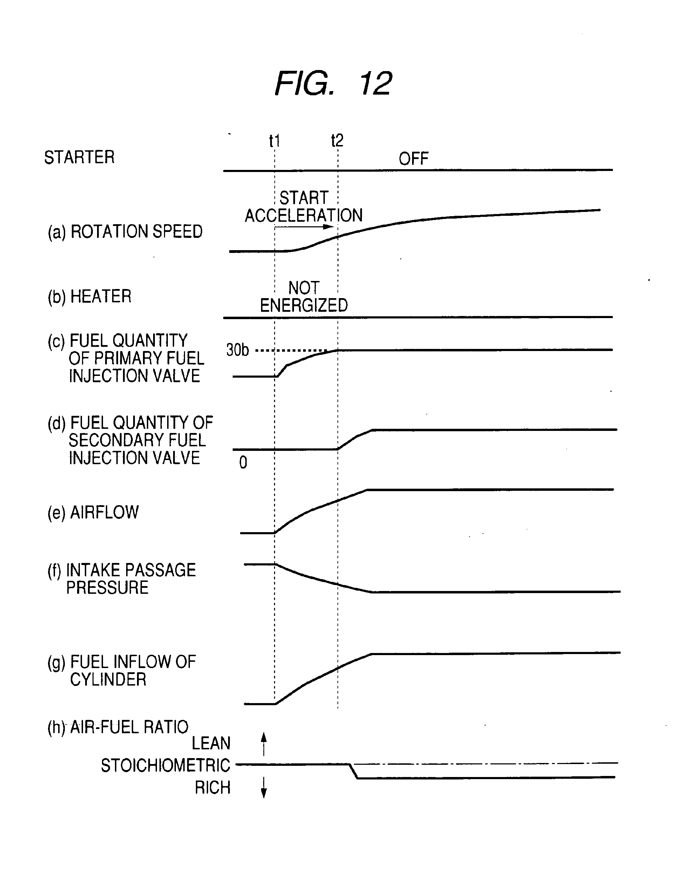

Fig. 10 to Fig. 12 are the timing charts showing the relational operations of the primary fuel injector 509, secondary fuel injector 530 and heater 531. Fig. 10 and Fig. 11 show the operation according to prior arts and Fig. 12 shows those according to the present invention.

Fig. 10 explains the operation of a conventional secondary fuel injector in combination with a heater at the time of engine startup.

When the engine speed (a) has increased above a specified level (complete explosion judgment level) after startup using the primary fuel injector, the intake passage pressure is lowered by the intake action of the engine as shown on (b). And the pressure differential of the throttle valve upstream and injector downstream in the intake passage becomes greater, because of which sufficient air for atomization is supplied and fuel is atomized thoroughly. Accordingly, injection from the primary fuel injector is terminated as shown by the solid line of (d), and injection from the secondary fuel injector is started as shown by the solid line of (e). Finely atomized fuel is introduced into the cylinder without adhering on the intake passage, and hence the combustion can improve. In this operation, at the same time of staring injection from the secondary fuel injector, the heater is turned on as shown on (c).

After the injection from the secondary fuel injector has begun, adhesion of fuel on the intake passage reduces and combustion stability improves compared to the injection from the primary fuel injector. Then, the angle of delay of ignition timing is corrected as shown on (f) so as to be able to increase the exhaust temperature and help activate the catalyst. In order to promote activation of the catalyst, for example, the heater is energized and fuel is injected from the secondary fuel injector for tens of seconds from the cold start of the engine up to the activation of the catalyst, taking into account the power consumption of the heater. Then, the injection from the secondary fuel injector and energization of the heater are terminated and the injection from the primary fuel injector is started.

Fig. 11 explains the operation of another conventional secondary fuel injector in combination with a heater at the time of engine startup. Fig. 11 shows a case where the injection from the secondary fuel injector is started from the beginning of the startup cranking. As soon as the startup cranking is started by a starter, the injection from the secondary fuel injector is begun as shown on (d). In this operation, injection from the primary fuel injector is not employed as shown on (c). In addition, it is assumed that the heater was turned on at a suitable timing before the startup as shown on (b) and so the heater has already been heated to some level.

Next, the operation of the primary and secondary fuel injectors according to the present invention is explained hereunder, using Fig. 12.

Fig. 12 shows a transient state, where the engine is accelerated to move from the stoichiometric condition below the dotted line into the area above it in Fig. 8, and explains the operation of the primary and secondary fuel injectors in that state.

Since the startup operation has completed, the starter is off. The heater is also off because energization is not necessary provided the engine has warmed up completely. When the accelerator pedal is first operated by the driver intending to increase the speed, the injection quantity from the primary injector begins increasing from time t1. That from the secondary fuel injector at time t1 is zero. When the injection quantity from the primary fuel injector reaches 30b equivalent of Fig. 6 during the acceleration, injection from the secondary fuel injector begins. Time t2 in Fig. 12 is the beginning of the injection from the secondary fuel injector. The acceleration continues on, and the air-fuel ratio finally turns to be rich in this case.

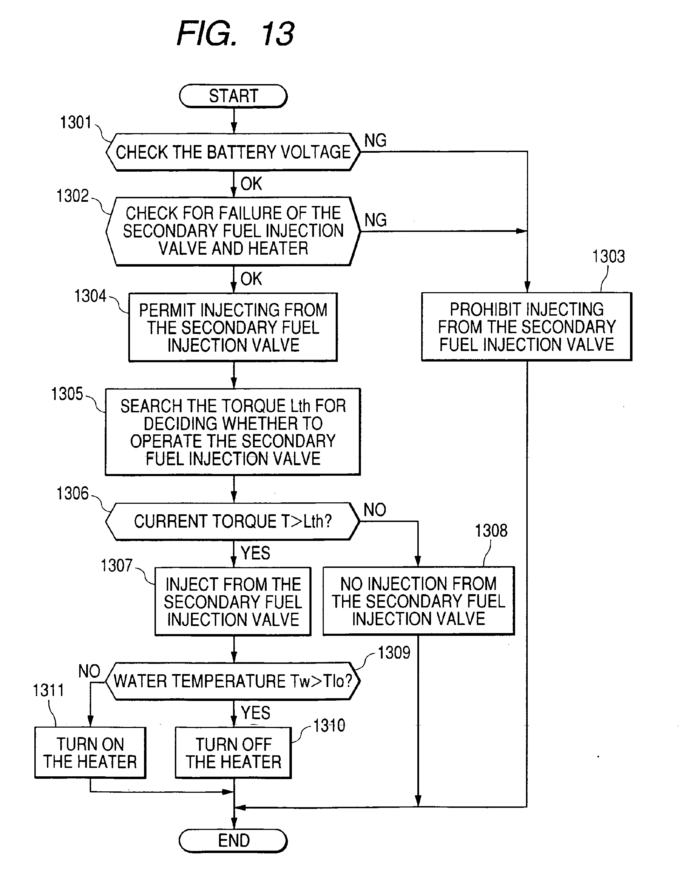

Fig. 13 is a flowchart of the software to be loaded on the ECU 515 for controlling the secondary fuel injector. To begin with, block 1301 checks the battery voltage, and if the answer is NG, block 1303 prohibits injecting from the secondary fuel injector. Next, block 1302 checks for failure of the secondary fuel injector and heater, and if the answer is NG, block 1303 prohibits injecting from the secondary fuel injector. If the answer in both block 1301 and 1302 is OK, the next block permits injecting from the secondary fuel injector.

Next, block 1305 searches the threshold torque Lth, as shown in Fig. 8, for deciding whether to operate the secondary fuel injector. To be concrete, for the ease of search, different values of Lth each corresponding to the engine speed as shown in Fig. 8 are collected as table data and the data are stored in the ROM beforehand.

Block 1306 compares the current torque T computed by the ECU with the above-mentioned Lth. If the current torque is bigger, the processing proceeds to block 1307 and fuel is injected from the secondary fuel injector. If the current torque is smaller, the processing proceeds to block 1308 and none is injected from the secondary fuel injector. Next, even in case fuel is injected from the secondary fuel injector, if the engine cooling water temperature Tw is higher than a specified value Tlo, the heater is turned off in block 1310. On the contrary, if the engine cooling water temperature Tw is lower than a specified value Tlo, the heater is turned on.

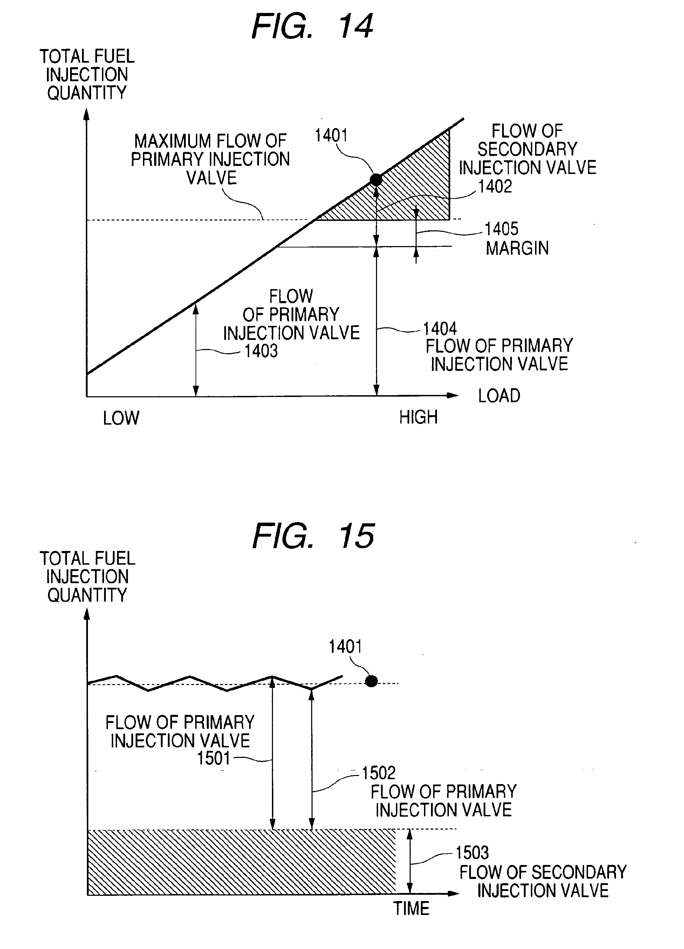

Next, how the fuel injection quantity is shared the primary fuel injector and secondary fuel injector is explained hereunder, using Fig. 14 and Fig. 15.

Basic sharing of fuel injection of the primary fuel injector and secondary fuel injector has already been shown in Fig. 6 and Fig. 7. More concrete sharing applicable to the engine control is explained hereunder.

When the load is increased from low to high, if the injection quantity from the primary fuel injector is fixed to the maximum and any additional injection quantity is to be controlled by the secondary fuel injector as shown in Fig. 14, fuel quantity correction needed for a feedback control of the air-fuel ratio or the like must be performed by the secondary fuel injector. Since the secondary fuel injector is located far from the cylinder than the primary fuel injector, response of air-fuel ratio and torque is slower because of conveyance delay of the fuel. To avoid this, necessary correction for the air-fuel ratio feedback control shall be performed using the primary fuel injector. In order to realize the total fuel injection quantity 1401 in Fig. 14, the share of the secondary fuel injector is increased to 1402 by adding a margin 1405 of the primary fuel injector. With this modification, the injection quantity of the primary fuel injector is now 1404, yet allowing of a margin for the control.

Fig. 15 shows the same operation in Fig. 14 explained above but in terms of time series. The secondary fuel injector 1503 shown in shadow is equivalent to 1402 in Fig. 14. In case of an air-fuel ratio feedback control, the total fuel injection quantity can be varied by varying the flow of the primary fuel injector such as from the primary injector flow 1501 to the primary injector flow 1502, centering around 1401.

While an embodiment of the invention has been described above, the present invention is not limited to this embodiment but various design modifications are permissible so far as the concept of the invention covered in the claims is satisfied.

For example, according to the above embodiment, data search in block 1307 in Fig. 13 employs a table of engine speed data shown in Fig. 8. An answer, however, can be obtained from the total injection quantity shown in Fig. 6, and even with this technique, a fuel injection system having greater dynamic range can be offered.

### [Effects of the Invention]

The present invention, employing the primary fuel injector and secondary fuel injector, can offer a fuel supply system and method for direct injection engine that realizes higher output as explained herein.

## Claims

1. A fuel supply system for in-cylinder direct fuel injection engine (507) comprising: a primary fuel injector (509) for injecting fuel directly into a cylinder (507b) of an engine (507); a supercharger (534) for increasing an intake air quantity of the engine (507); and a secondary fuel injector (530) provided in addition to the primary fuel injector (509);
wherein, in a specified engine load area, fuel is supplied using the primary fuel injector (509) and secondary fuel injector (530) together.

2. The fuel supply system according to Claim 1, wherein the secondary fuel injector (530) is installed in an intake passage in the upstream of the primary fuel injector (509).

3. The fuel supply system according to Claim 1 or 2, wherein a throttle valve (505a) for controlling the intake air quantity of the engine (507) is provided in the downstream of the supercharger (534), and the secondary fuel injector (530) is installed in an auxiliary air passage (9) bypassing the throttle valve (505a).

4. The fuel supply system according to at least one of Claims 1 to 3, wherein an electric heater (531) is provided at or near to the secondary fuel injector (530).

5. The fuel supply system according to at least one of Claims 1 to 4, wherein the electric heater (531) is not energized in an area where the engine load is higher than a specified value.

6. The fuel supply system according to at least one of Claims 1 to 5, wherein the electric heater (531) is not energized under a condition where fuel is supplied using the primary fuel injector (509) and the secondary fuel injector (530) together.

7. The fuel supply system according to at least one of Claims 1 to 6, wherein the electric heater (531) is not energized under a condition where fuel is supplied using the primary fuel injector (509) and the secondary fuel injector (530) in an area where the engine load is higher than a specified value.

8. The fuel supply system according to at least one of Claims 1 to 7, wherein the electric heater (531) is energized within a specified period of time after the startup cranking while the catalyst temperature is increasing.

9. The fuel supply system according to at least one of Claims 1 to 8, wherein the fuel injected from the secondary fuel injector (530) is used for the combustion contributable to the output of the engine.

10. The fuel supply system according to at least one of Claims 1 to 9, wherein the fuel injected from the secondary fuel injector (530) and part of the fuel injected from the primary fuel injector (509) are used for the combustion contributable to the output of the engine.

11. The fuel supply system according to at least one of Claims 1 to 10, wherein the supply pressure to the primary fuel injector (509) is higher than the supply pressure to the secondary fuel injector (530).

12. The fuel supply system according to at least one of Claims 1 to 11, wherein the primary fuel injector (509) is supplied fuel by a mechanical high-pressure pump (511), and the secondary fuel injector (530) is supplied fuel by a motor-driven low-pressure pump (510).

13. A fuel supply method for in-cylinder direct fuel injection engine (507) where fuel is injected from a primary fuel injector (509) directly into the cylinder (507b), in which a secondary fuel injector (530) is provided in addition to the primary fuel injector (509) and, in a specified engine load area, fuel is supplied using the primary fuel injector (509) and secondary fuel injector (530) together.

14. The fuel supply method according to Claim 13, wherein an electric heater (531) is provided on or near to the secondary fuel injector (530).

15. The fuel supply method according to Claim 14, wherein the electric heater (531) is energized until the engine load reaches a specified value so as to heat the fuel supplied from the secondary fuel injector (530).

16. The fuel supply method according to Claim 14 or 15, wherein the electric heater (531) is energized for a period of time within a specified length after the startup cranking where the catalyst temperature is increasing so as to heat the fuel supplied from the secondary fuel injector (530).

17. The fuel supply method according to at least one of Claims 14 to 16, wherein the fuel injected from the secondary fuel injector (530) is used for the combustion contributable to the output of the engine (507).

18. The fuel supply method according to at least one of Claims 14 to 17, wherein the fuel injected from the secondary fuel injector (530) and part of the fuel injected from the primary fuel injector (509) are used for the combustion contributable to the output of the engine output.

19. The fuel supply method according to at least one of Claims 14 to 18, wherein the supply pressure to the primary fuel injector (509) is higher than the supply pressure to the secondary fuel injector (530).

20. The fuel supply method according to at least one of Claims 14 to 19, wherein fuel supply to the primary fuel injector (509) is carried out by a mechanical high-pressure pump (511) and that to the secondary fuel injector (530) is carried out by a motor-driven low-pressure pump (510).
